# EUROPEAN PATENT APPLICATION

(11) **EP 1 693 603 A2**
(43) Date of publication of application: **23.08.2006**
(21) Application number: 06003446.9
(22) Date of filing: 20.02.2006
(51) Int. Cl.: F16H 61/28, F16H 59/10

(54) **Shift lever device for vehicle**

(30) Priority: 22.02.2005 JP 2005046215
(71) Applicant: FUJI KIKO Co., Ltd., Kosai-shi Shizuoka (JP)
(72) Inventor: Kino, Keisuke, Kosai-shi, Shizuoka (JP)
(74) Representative: Grünecker, Kinkeldey, Stockmair & Schwanhäusser Anwaltssozietät

(57) **Abstract**

A shift lever device (1) for a vehicle is provided. The shift lever device includes a shift lever (20) rotationally operated to change an operating range position in an automatic transmission, a torque detecting unit (30) having a supporting part (31) to which an operator's operating force against the shift lever is inputted, the supporting part being arranged in a pivot part of the shift lever, an assist-force imparting unit (40) that imparts an assist force to the shift lever corresponding to torque detected by the torque detecting unit and that outputs the assist force to the automatic transmission, a transmission plate (50) attached to the supporting part of the torque detecting unit so as to rotate together with the supporting part integrally, and a check mechanism (60) that presses the transmission plate elastically to impart operational feeling to the shift lever through the transmission plate.

## Description

### BACKGROUND OF THE INVENTION

### 1. FIELD OF THE INVENTION

The present invention relates to a shift lever device for a vehicle, which imparts an assist force (backup force) to an operator's manually-operating force applied to a shift lever in changing an operating range position in an automatic transmission, thereby reducing an operator' s burden on selecting of the operating range position.

### 2. DESCRIPTION OF THE RELATED ART

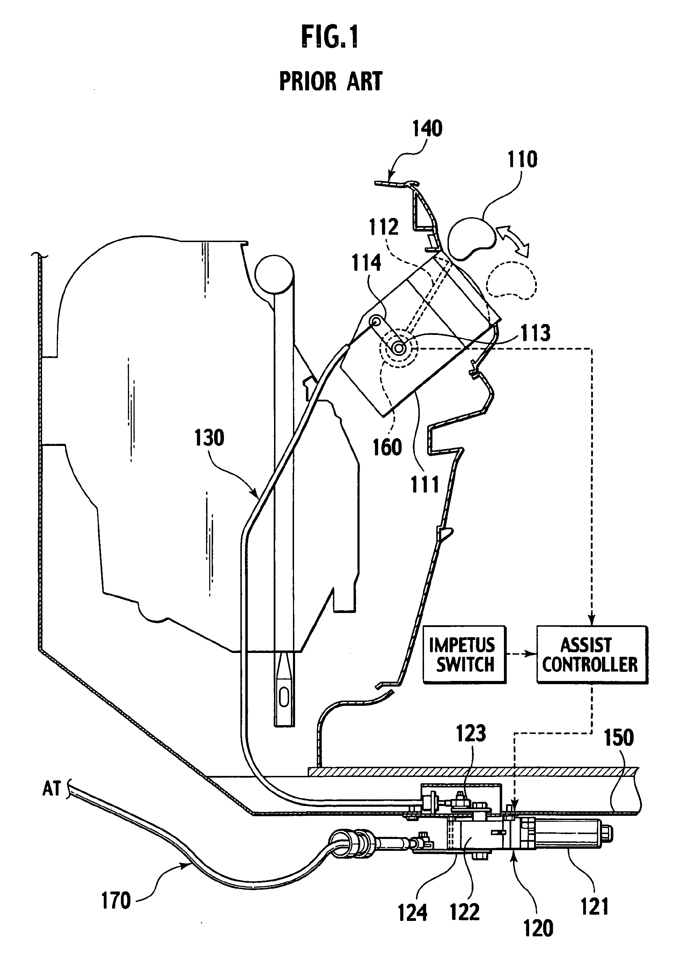

Fig. 1 shows an automatic transmission device for a vehicle, which is disclosed in Japanese Patent Application Laid-open No. 2003-287126.

This automatic transmission device includes a shift lever 110, an assist-force imparting unit 120 and a transmission cable 130 connecting the shift lever 110 with the assist-force imparting unit 120.

The shift lever 110 is arranged on an interior side of an instrument panel 140 and includes an operational shaft 112. The operational shaft 112 extends from a lever box 111 behind the instrument panel 140. A lever arm 114 is attached on a pivotal side of the operational shaft 112. The lever arm 114 is connected to one end of the transmission cable 130. The operational shaft 112 is provided, on the pivotal side, with a torque sensor 160 for detecting an operator' s operating force applied on the shift lever 110.

The assist-force imparting unit 120 is positioned on a backside of a floor panel 120 forming a vehicle body. The assist-force imparting unit 120 includes an electric motor 121, a reduction gear housing 122 and an input arm 123 connected to the other end of the transmission cable 130. An output arm 124 is attached to the reduction gear housing 122. The output arm 124 is connected to an automatic transmission (not shown) in an engine compartment through a shift transmission cable 170.

The assist-force imparting unit 120 is provided to impart a rotating force of the electric motor 121 as an assist force to an operator's manually-operating force applied on the shift lever 110 and also detected by the torque sensor 160. Thus, the assist-force imparting unit 120 operates so as to lighten an operator's burden on the manually-operating force applied on the shift lever 110.

### SUMMARY OF THE INVENTION

However, since the lever arm 114 of the shift lever 110 is connected to input arm 123 of the assist-force imparting unit 120 through the transmission cable 170 in the automatic transmission device of Fig. 1, an assisting operation for the shift lever 110 is easy to be transmitted with time lag. That is, it is noted that the transmission cable 130 is long and easy to loosen. If the cable 130 loosens, then the torque sensor 160 cannot detect torque until a slack of the cable 130 is canceled, causing the assist force to the shift lever 110 to be transmitted with delay. In order to prevent an occurrence of slack about the cable 130, respective components forming the automatic transmission device have to be manufactured with high accuracy, raising troublesome issues in machining and assembling the components.

In order to solve the above-mentioned problems in the related art, an object of the present invention is to provide a shift lever device that does not produce both time-lag and delay in its assistance and require high accuracy in manufacturing components of the shift lever device.

In order to attain the above object, according to the present invention, there is provided a shift lever device for a vehicle, comprising: a shift lever which is rotationally operated to change an operating range position in an automatic transmission of the vehicle; a torque detecting unit having a supporting part to which an operator's operating force against the shift lever is inputted, the supporting part being arranged in a pivot part of the shift lever to detect an operator' s operating force applied on the shift lever; an assist-force imparting unit that imparts an assist force to the shift lever corresponding to torque detected by the torque detecting unit thereby outputting the assist force to the automatic transmission; a transmission plate attached to the supporting part of the torque detecting unit so as to rotate together with the supporting part integrally; and a check mechanism that presses the transmission plate elastically thereby imparting operational feeling to the shift lever through the transmission plate.

In the above-constructed shift lever device, since the transmission plate 50 for rotating an output shaft of the assist-force imparting unit is attached to the supporting part of the torque detecting unit so as to rotate together with the supporting part, a long transmission cable becomes dispensable and additionally, it becomes possible to transmit a rotating force of the assist-force imparting unit to the shift lever directly. In addition, since the check mechanism presses the transmission plate, there is no possibility that it rattles during the operation of the shift lever device. For these reasons, it becomes possible to prevent occurrence of time-lag and delay in assistance of the shift lever device. Owing to the direct transmission of the rotating force, it becomes dispensable to machine components for transmission with high accuracy and assemble them with high accuracy.

The check mechanism may include a concavo-convex part formed on the transmission plate and a check roller attached to the assist-force imparting unit to engage with the concavo-convex part with pressure.

According to the above constitution of the check mechanism, since the check roller engages with the concavo-convex part of the transmission plate while being in pressure-contact with the concavo-convex part, it is possible to prevent the transmission plate from rattling during its rotating certainly.

Alternatively, the transmission plate may be formed with a transmission gear part that meshes with the output shaft of the assist-force imparting unit.

According to the above constitution of the transmissionplate, since the transmission plate is formed with the transmission gear part meshing with the output shaft of the assist-force imparting unit, it is possible to transmit the rotating force to the assist-force imparting unit with a simple structure having the reduced number of components.

In the shift lever device, still further, there may be further provided a position detecting sensor which is arranged on the supporting part of the torque detecting unit to detect both pivot direction and assist position of the shift lever.

According to the above constitution, owing to the provision of the position detecting sensor on the supporting part of the torque detecting unit, it is possible to detect both pivot direction and assist position of the shift lever with high accuracy.

These and other objects and features of the present invention will become more fully apparent from the following description and appended claims taken in conjunction with the accompany drawings.

### BRIEF DESCRIPTION OF THE DRAWINGS

Fig. 1 is a sectional view of an automatic transmission device related to the present invention;
Fig. 2 is an exploded perspective view showing an overall shift lever device in accordance with an embodiment of the present invention; and
Fig. 3 is a sectional view showing an assembled state of the shift lever device in accordance with the embodiment of the present invention.

### DESCRIPTION OF THE PREFERRED EMBODIMENT

Referring to accompanying drawings, an embodiment of the present invention will be described below. In the following description of the drawings, identical or similar elements are indicated with the same or similar reference numerals. It should be noted that the shown drawings are typical and therefore, a relationship in each element between thickness and dimensions in plan view, a ratio in thickness between respective layers, etc. are different from those in reality.

Additionally, the following embodiment is illustrative of devices and methods both embodying a technical idea of the present invention and therefore, the above technical idea is not specified to only the following constituents in view of their materials, shapes, structures, arrangements and so on. Regarding the technical idea of the present invention, various changes and modifications may be made within the scope of claims.

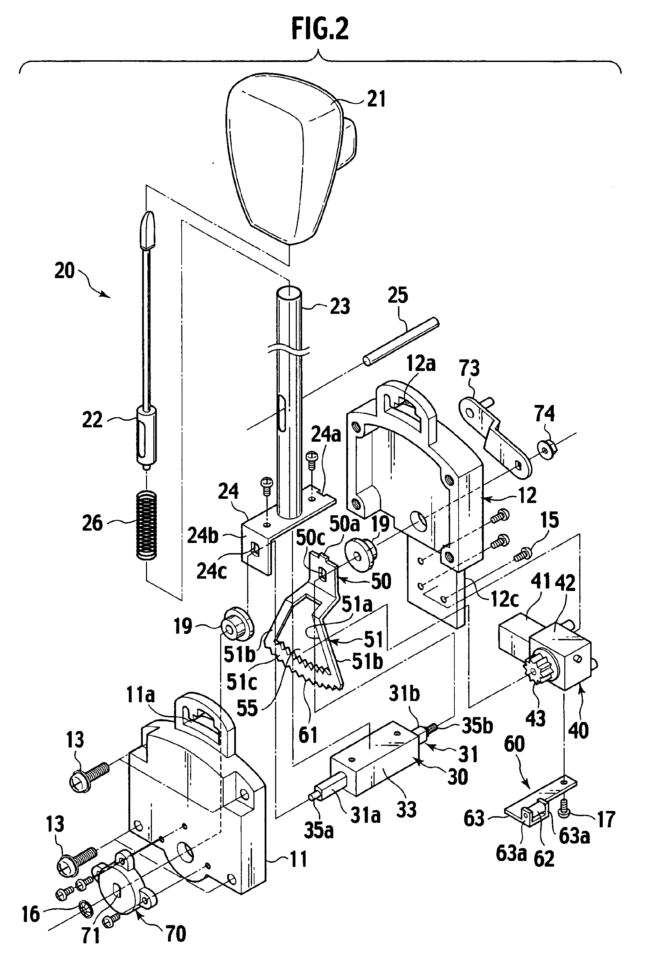

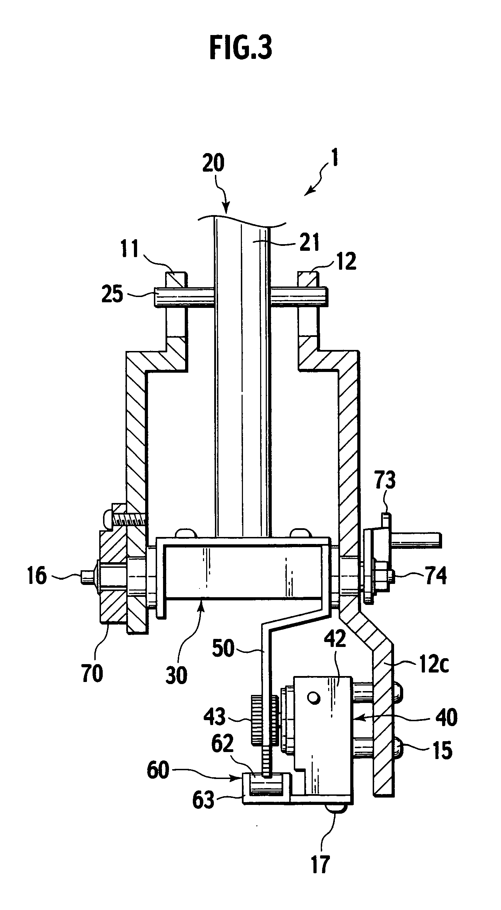

Fig. 2 is an exploded perspective view showing an overall shift lever device in accordance with the embodiment of the present invention. Fig. 3 is a sectional view showing an assembled state of the shift lever device.

The shift lever device 1 of the embodiment includes a first casing 11 and second casing 12 in pairs, as shown in Fig. 3. To the casings 11, 12 in pairs, there are attached a shift lever 20, a torque sensor 30 as a torque detecting unit, an actuator 40 as an assist-force imparting unit 40, a transmission plate 50 and a check mechanism 60. The torque sensor 30 is formed by a structure known in the prior art torque detecting unit. The first casing 11 and the second casing 12 are assembled to each other through fixing bolts 13.

The shift lever 20 is pivotally operated by an operator (driver of vehicle) in order to change an operating range position in an automatic transmission (not shown) of a vehicle (also not shown). By an operator's pivotal operation to the shift lever 20, the operating range position can be changed to any one of respective operating range positions: "P" (parking range) position; "R" (reverse range) position; "N" (neutral range) position; "D" (drive range) position; "2" (second range) position; and "L" (low range) position.

The shift lever 20 includes a shift rod 22 having its top end attached to an operating knob 21, a cylindrical lever body 23 having the shift rod 22 inserted thereinto, and an L-shaped lever base 24 attached to a lower end of the lever body 23. The shift rod 22 is always urged by a coil spring 26 inserted into the lever body 23, upwardly. A lock pin 25 is arranged to penetrate the lever body 23 and the shift rod 22 inserted into the lever body 23. Moving in operating holes 11a, 12a formed in upper parts of the first casing 11 and the second casing 12 respectively, the lock pin 25 operates to allow the shift rod 22 to come to a standstill in the above-mentioned range positions. The transmission plate 50 is attached to the lever base 24. The torque sensor 30 is carried by the transmission plate 50 and the lever base 24.

The lever base 24 is provided, on its end face, with a rectangular recessed groove 24a. While, the transmission plate 50 is provided, on its top end, with a rectangular projection 50a. In engagement between the lever base 24 and the transmission plate 50, the rectangular projection 50 is fitted into the recessed groove 24a while remaining a designated gap. In the lever base 24, a lateral surface 24b is defined so as to oppose the transmission plate 50. The torque sensor 30 is supported, on both sides thereof, by the lateral surface 24b of the lever base 24 and the transmission plate 50.

The torque sensor 30 has a supporting part 31 provided, on its one side, with a first shaft 31a and also provided, on the other side, with a second shaft 31b. The first shaft 31a is coaxial with the second shaft 31b. A torque detecting part 33 is interposed between the first shaft 31a and the second shaft 31b. The torque detecting part 33 is adapted so as to detect a torsional torque generated between the first shaft 31a and the second shaft 31b.

In the torque sensor 30, both of the first shaft 31a and the second shaft 31b are together shaped to have substantially-oval cross sections each obtained as if cutting a round bar by two parallel planes partially. Corresponding to the so-formed shafts 31a, 31b, the lateral surface 24b of the lever base 24 and the transmission plate 50 have shaft holes 24c, 50c formed for engagement with the shafts 31a, 31b, respectively. Since the first and second shafts 31a, 31b are inserted into the shaft holes 24c, 50c for engagement, the torque sensor 30 is supported by the lever base 24 and the transmission plate 50. In the above-mentioned structure, the transmission plate 50 is attached to the second shaft 31b of the supporting part 31 in the torque sensor 30 so as to rotate together with the second shaft 31b integrally.

In the torque sensor 30, the first shaft 31a and the second shaft 31b are provided, at their respective leading ends, with axle parts 35a, 35b having circular cross-sections, respectively. The axle parts 35a, 35b are rotatably supported by the first casing 11 and the second casing 12 through bushes 19, 19, respectively.

The first shaft 31a and the second shaft 31b of the torque sensor 30 penetrate the first casing 11 and the second casing 12 and project out of these casings 11, 12, respectively. A potentiometer 70 as a position-detecting sensor is attached to an end of the first shaft 31a projecting from the first casing 11. A select lever 73 is connected to the second shaft 31b projecting from the second casing 12 so as to rotate together with the second shaft 31b integrally. This connection between the second shaft 31b and the select lever 73 is completed since the second shaft 31b penetrates the select lever 73 and allows its penetrating end to thread-engage with a nut 74. The select lever 73 is connected to an in-vehicle automatic transmission (not shown).

The potentiometer 70 is fixed on an outer surface of the first casing 11 through screws and also provided with a noncircular through-hole 71 that the first shaft 31a of the torque sensor 70 penetrates. A push nut 16 is attached to the circular axle part 35a forming a penetrating end of the first shaft 31a penetrating the through-hole 71, preventing the potentiometer 70 from dropping off the first shaft 31a.

With a rotation of the first shaft 31a of the torque sensor 30, the potentiometer 70 detects a pivot direction of the shift lever 20 and its assist position, allowing a detection of both rotating direction (normal/reverse rotation) and assist position of the actuator 40. In this way, owing to the provision of the potentiometer 70 on the supporting part 31 of the torque sensor 30, it is possible to detect both of the pivot direction and the assist position of the shift lever 20 with high accuracy.

In the transmission plate 50, a transmitting part 51 is formed to extend downwardly of the lever base 24. The transmitting part 51 comprises a window part 51a at a substantially-central part of the part 51, a pair of arm parts 51b, 51b on both sides of the window part 51a, and a bridge part 51c bridging between respective lower ends of the arm parts 51b. The actuator 40 is interposed between the transmitting part 51 and the second casing 12.

The actuator 40 is attached to a holder part 12c hanging from the lower end of the second casing 12 and also fixed on it by means of screws 15, 15 screwed into the holder part 12c. With this fixation, the actuator 40 is interposed between the second casing 12 and the transmission plate 50.

The actuator 40 is formed by an electric motor 41 and a reduction-gear housing 42 assembled in alignment with the motor 41. The reduction-gear housing 42 is provided, on its outer surface, with a pinion gear 43. The pinion gear 43 is associated with an output shaft (not shown) of the electric motor 41 through reduction gears in the reduction-gear housing 42. Thus, the pinion gear 43 and the output shaft of the electric motor 41 are adapted so as to mutually transmit a rotating force to each other through the reduction gears.

The pinion gear 43 of the actuator 40 is inserted into the window part 51a of the transmission plate 50. In the bridge part 51c on the downside of the window part 51a, a transmission gear part 55 is formed in mesh with the pinion gear 55. With the engagement of the transmission gear part 55 with pinion gear 43, when the transmission plate 50 swings, its rotating force is transmitted to the pinion gear 43. While, a rotation of the pinion gear 43 causes the transmission plate 50 to be swung.

In this way, since the pinion gear 43 meshes with the transmission gear part 55, the actuator 40 is connected to the shift lever 20 through the transmission plate 50. It is noted that if a load on the shift lever 20 is increased, then a torque detected by the torque sensor 30 also increases. Making use of this fact, in such a case, the actuator 40 operates to increase impressed voltage on the electric motor 41 corresponding to the so-increased torque to impart a rotating force of the electric motor 41 as an assist force to an operator' s manually-operating force against the shift lever 20.

According to the embodiment of the invention, the rotating speed of the electric motor 41 is decelerated in one speed by the transmission gear part 55. Therefore, it is possible to miniaturize the electric motor 41 that much.

In the bridge part 51c, the transmission plate 50 is also provided, on its lower surface opposing the transmission gear part 55, with a concavo-convex part 61 as a constituent of a check mechanism 60.

The check mechanism 60 comprises the concavo-convex part 61 and a check roller 62. In the check mechanism 60, a pair of supporting parts 63a, 63a are formed by bending opposing free-end portions of an attachment arm 63 in the form of a plate spring upwardly. The check roller 62 is rotatably fitted to the attachment arm 63 since both ends of the roller 62 are inserted and held between the supporting parts 63a, 63a. The attachment arm 63 in the form of a plate spring is attached to the reduction gear housing 42 through a screw 17, so that the check roller 62 is elastically pressed on the concavo-convex part 61 of the bridge part 51c. Thus, the check roller 62 is engaged with the concavo-convex part 61 with pressure.

The concavo-convex part 61 is formed so as to correspond to respective operating range positions occupied by the shift lever 20. In the above-mentioned structure, when an operator's pivotal manipulation against the shift lever 20 causes the transmission plate 50 to swing, the check roller 62 rotates in pressure-contact with the concavo-convex part 61. Then, corresponding to the operating range position of the shift lever 20, the check roller 62 moves from a concave part of the concavo-convex part 61 to its convex part or from a convex part of the concavo-convex part 61 to its concave part. During this movement of the check roller 62, a contact pressure on the concavo-convex part 61 changes. Then, this change in the pressure of the check roller 62 is transmitted to the shift lever 20 through the transmission plate 50. In this way, it becomes possible to afford moderation to an operator's feeling of manipulating the shift lever 20 in the course of changing the operating range position.

In detail, when the shift lever 20 is operated, the lever base 24 rotates together with the shift lever 20. Then, a pivotal movement of the shift lever 20 is inputted to the potentiometer 70 to detect both pivot direction and pivot position of the shift lever 20. Due to the detection of these parameters, both assistant rotating direction and assist position by the actuator 40 are determined. In addition, when the shift lever 20 is manipulated, the torque sensor 30 twists since the rectangular projection 50a in engagement with the recessed groove 24a moves in the gap remained in the recessed groove 24a. Thus, an operator's operating force applied on the shift lever 20 can be detected due to a torsional torque about the torque sensor 30. In succession, it is carried out to calculate an assist force from the so-detected operating force and further supply the electric motor 41 with designated current corresponding to the so-calculated assist force. Then, the electric motor 41 transmits its rotating force to the transmission plate 50 with the aid of meshing between the pinion gear 43 and the transmission gear part 55, imparting the assist force to the shift lever 20.

When the operator continues to operate the shift lever 20 furthermore, the operating range position in the automatic transmission (not shown) connected to the select lever 73 is changed. In the check mechanism 60, then, the attachment arm 63 bends and the check roller 62 moves from one concave part in the concavo-convex part 61 to the neighboring convex part while climbing over one convex part interposed between these concave parts. With this movement, the operator is informed of a situation where the operating range position in the automatic transmission has changed over to the other range position.

The above-mentioned embodiment will be summarized as follows .

First, the torque sensor 30 is assembled so that the supporting part 31 bridges between the lever base 24 and the transmission plate 50. In addition, the supporting part 31 of the torque sensor 30 is positioned in a pivot part of the shift lever 20 so as to double as its pivot shaft. That is, as a pivot shaft exclusive to the shift lever 20 becomes dispensable, the number of components is reduced to allow both weight-saving and miniaturization of the shift lever device.

The transmission plate 50 rotated by the pinion gear 43 of the actuator 40 is attached to the supporting part 31 of the torque sensor 30 so as to rotate together with the part 31 integrally. Accordingly, it is possible to transmit the rotating force of the actuator 40 to the shift lever 20 directly. As a result, a long transmission cable in prior art becomes dispensable. As the check roller 62 and the concavo-convex part 61 in the check mechanism 60 are arranged so as to press the transmission plate 50, there is no possibility that it rattles during the operation of the shift lever device. For these reasons, it becomes possible to prevent occurrence of time-lag and delay in assistance to an operator's operating the shift lever. In addition, owing to the direct transmission of the rotating force, it is dispensable to both machine and assemble components for transmission with high accuracy.

According to the embodiment of the present invention, since the check roller 62 engages with the concavo-convex part 61 of the transmission plate 50 while being in pressure-contact with the part 61 due to spring force, it is possible to prevent the transmission plate 50 from rattling during its rotating and swinging.

Since the transmission plate 50 is formed with the transmission gear part 55 meshing with the pinion gear 43 of the actuator 40, the rotating force can be transmitted to the actuator 40 with a simple structure having the reduced number of components.

Note that in the embodiment of the present invention, the pivot direction of the shift lever 20 and the assist position are detected by the potentiometer 70. Nevertheless, such a potentiometer could be removed so long as these parameters can be detected by the torque sensor 30. Then, the number of components is reduced, so that the shift lever device can be simplified in structure and also assembled with ease.

Although the embodiment of the present invention have been described as put forth above, the present invention is not limited to this, and configurations of the respective units can be replaced by arbitrary configurations having similar functions.

## Claims

1. A shift lever device for a vehicle, comprising:
a shift lever rotationally operated to change an operating range position in an automatic transmission of the vehicle;
a torque detecting unit having a supporting part to which an operator' s operating force against the shift lever is inputted, the supporting part being arranged in a pivot part of the shift lever to detect an operator's operating force applied on the shift lever;
an assist-force imparting unit configured to impart an assist force to the shift lever corresponding to torque detected by the torque detecting unit thereby outputting the assist force to the automatic transmission;
a transmission plate attached to the supporting part of the torque detecting unit so as to rotate together with the supporting part integrally; and
a check mechanism configured to press the transmission plate elastically thereby imparting operational feeling to the shift lever through the transmission plate.

2. The shift lever device of claim 1, wherein the checkmechanism includes:
a concavo-convex part formed on the transmission plate; and
a check roller attached to the assist-force imparting unit to engage with the concavo-convex part with pressure.

3. The shift lever device of claim 1, wherein the transmission plate is formed with a transmission gear part that meshes with an output shaft of the assist-force imparting unit.

4. The shift lever device of claim 1, further comprising a position detecting sensor for detecting a pivot direction of the shift lever and an assist position thereof, the position detecting sensor being arranged on the supporting part of the torque detecting unit.
